# EUROPEAN PATENT APPLICATION

(11) **EP 3 839 711 A1**
(43) Date of publication of application: **23.06.2021**
(21) Application number: 19465595.7
(22) Date of filing: 18.12.2019
(51) Int. Cl.: G06F 3/044, G06F 3/01

(54) **A TOUCH PANEL**

(71) Applicant: Continental Automotive GmbH, 30165 Hannover (DE)
(72) Inventor: Cutlac, Hunor-Thorsten, 65824 Schwalbach a. Ts. (DE)

(57) **Abstract**

The invention relates to a touch panel (1) comprising a conductive layer (4), the conductive layer (4) comprises an active area, whereby the active area comprises a number of electrodes, whereby adjacent electrodes arranged in said active area that said electrodes are decoupled from each other by inactive gaps (3) for preventing conduction between the adjacent electrodes, whereby at least some of the inactive gaps (3) are connected together to form a decoupling area.

## Description

The invention relates to a touch panel. In particular, the present invention relates to a capacitive touch panel with a number of electrodes horizontal and vertical.

Customers in the automotive industry require a proximity feature which can be used to detect gestures in the air without touching the surface of the glass. This feature is seen in consumer electronics with tablets and phones that can detect from distance the users' hand. Touch panels use proximity detection using an electrical field emitted by an active area of the touch panel or using some antennas in order to emit the electrical field.

US 2011 0109 577 A1 discloses an apparatus detecting a proximity touch, the apparatus comprising: a sensing unit to detect a proximity touch of an object and generate a proximity detection signal based on the detected proximity touch; a control unit to generate detection information including three-dimensional (3D) positional information about the object using the proximity detection signal, generate tracking information by tracking the detection information, retrieve a gesture corresponding to the tracking information from a storage unit to identify the gesture, and to control execution of an operation corresponding to the gesture; and the storage unit to store the gesture information corresponding to the tracking information.

It is an object of the present invention to provide an improved touch panel, which can be used for detecting a proximity touch.

This object is achieved by a touch panel with the features of claim 1.

The dependent claims list further advantageous measures which can be combined with one another, as desired, in order to achieve further advantages.

The object is achieved by a touch panel, the touch panel comprising:
a conductive layer, which comprises an active area, whereby said active area comprises a number of electrodes, whereby adjacent electrodes are arranged in said active area that said electrodes are decoupled from each other by inactive gaps for preventing conduction between the adjacent electrodes, whereby at least some of the inactive gaps are connected together to a form a decoupling area.

When driven by the touch controller two electrode can form an electrical field between them.
Preferably the electrodes are sensing electrodes.

It was recognized by the invention, that the touch panels of the state of the art doesn't completely exploit the conductive layer. Furthermore, it was recognized by the invention that the gaps are not used in the touch panel functionality. The only function of this gaps is to prevent direct electrical field coupling between the electrodes and to prevent the electrodes to connect electrically to the lines near each other.

The invention uses the gaps between the electrodes comprised of the decoupling surfaces, connect them together to form the decoupling area. This decoupling area can be used for proximity detection, for example finger approaching and gestures in the air.

Touch panels can also be touch screens. The invention can be used by all touch detection devices and interaction with devices in industrial market. Also, the invention can be used for touch proximity detection in automotive and also in other markets like consumer.

In a preferred embodiment the decoupling area is used for proximity detection. By using the decoupling area, it is possible to detect a movement at a greater distance than 30 cm.

Preferably all inactive gaps are linked together to form the decoupling area.

In a preferred embodiment the decoupling area is split into zones in order to detect variations between zones.

In a preferred embodiment the touch panel comprises a controller to drive the decoupling area. In another preferred embodiment the touch panel comprises a touch panel controller to drive the electrodes.

Driving of this decoupling area can be done with a separate controller, whereas a touch panel controller is used to drive the active area of the touch panel. By this the active area, that means the electrodes, and the decoupling area can be driven in parallel and also with a higher driving signal.

Preferably the active area and the decoupling area is driven in parallel by the controller and the touch panel controller. Therefore, the decoupling area can be driven while operating, for example reading, the active area at the same time.

In a preferred embodiment the touch panel is configured, so that said active area is set or operated in a sleep mode while operating the decoupling area in a normal mode.
This is possible because of driving the decoupling area separately by the controller while driving the active area by the touch panel controller.

In another preferred embodiment the touch panel is configured, so that the decoupling area is triggered to activate the active area on proximity detection. This can save energy and reduce consumption of the complete device.

In another preferred embodiment the inactive gaps are connected together by the use of bridges. Therefore, the connection together can be done, without affecting the functionality of the touch panel. This a simple way to link all the gaps together.

Preferably the electrodes are of rhombus-shaped form, so that the active area forms a diamond-type pattern.

In a preferred embodiment all inactive gaps are connected together to form the decoupling area. This results in a large decoupling area.

Further objects, aspects and advantages of the invention will be explained by means of the following detailed description of preferred embodiments of the invention, when taken in conjunction with the figures of the enclosed drawings.

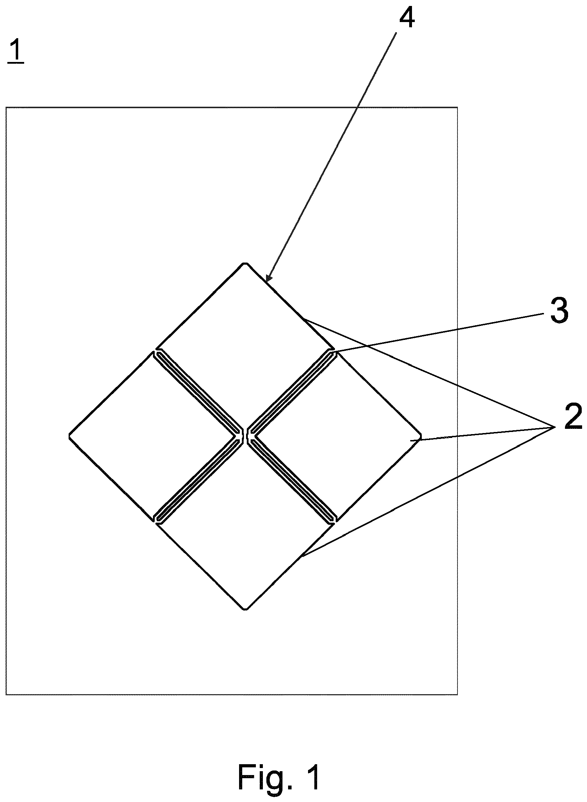

FIG 1: shows a first embodiment of a touch panel according to the invention,

FIG 1 shows a first embodiment of a touch panel 1 according to the invention. A touch panel 1 can be seen as a stack of plurality of different layers. At least one of the layers is a conductive layer 4.

Preferably the touch panel 1 comprises a single conductive layer 4.

The conductive layer 4 comprises of a number of adjacent electrodes.

The electrodes usually act as sensing electrodes 2. The sensing electrodes 2 form an active area.

The active area is preferably an area, where the sensing electrodes 2 are connected together in order to recognize a touch by a touch panel input unit.

The sensing electrode 2 can be of any conductive transparent material, that can have high electric conductivity and easy processability.

The sensing electrodes 2 of the active area are controlled by a touch panel controller preferably an integrated circuit. An integrated circuit is an assembly of electronic components, fabricated as a single unit, in which miniaturized active devices, e.g., transistors and diodes and passive devices are built up on a thin substrate of semiconductor material. The semiconductor material is normally silicon. The touch panel controller drives only the active area.

The sensing electrodes 2 function to sense a variation in capacitance at the time of touch by the touch panel input unit. This allows a touch panel controller (not shown) to recognize touched coordinates.

The sensing electrodes 2 are of rhombus-shaped form, so that the active area forms a diamond-type pattern.

Adjacent sensing electrodes 2 are decoupled from each other by inactive gaps 3 in order to prevent electrical field loss between the sensing electrodes 2.

At least some, or all of the inactive gaps 3 are connected together to form the decoupling area. The decoupling area is not connected to any potential.

The inactive gaps 3 are linked together with bridges, thereby not affecting the normal functionality of touch panel 1.

By this a large area, which is required for detecting proximity detection, is provided in form of the decoupling area. The decoupling area can be used for example for detecting the human hand approaching to the touch panel 1.

So, the decoupling area that is used for detection is covering the complete inactive gaps 3 of the touch panel 1.

The decoupling area needs to be driven at high levels of voltage. This would drive a normal touch panel controller to the limit.

In order not to influence the normal functionality, it was noticed by the invention, that a different driver has to drive the proximity part of the decoupling area.
The touch panel 1 comprises therefore a separate specialized controller preferably an integrated circuit (IC) to drive the decoupling area.

The specialized controller is designed in that way, that it drives the decoupling area and detects proximity approach, for example a user finger approaching.
By the touch panel controller and by the separate controller the active area and the decoupling area can be driven in parallel. That means, the active area and the decoupling area, that means all the inactive gaps 3 which are linked together, can be driven in parallel. That means, that the sensing electrodes 2 and the decoupling area can be driven in parallel.

The inventive touch panel 1 uses structures (gaps 3) already existing in diamond-type pattern of the touch panel 1.

The inventive touch panel 1 provides a connection of all these small decoupled inactive gaps 3 as a larger decoupling area. Driving of this decoupling area can be done with a separate controller, whereas a touch panel controller is used to drive the active area of the touch panel 1. By this the active area, that means the sensing electrodes 2, and the decoupling area can be driven in parallel.

The sensing electrodes 2 (active area) are used for the interaction with the end user.

The invention noticed, that the area with the inactive gaps 3 (decoupling area) is not driven by any other means and that this leads to an area inside the touch panel 1 that is not driven or used to have any functionality.

By the invention now, the decoupling area, which can be driven by a separate controller, can now be used as a proximity sensor.

By having an increase surface a proximity detection can be done by a movement at a greater distance of around 30 cm.

The invention also allows driving of the decoupling area separately while driving the active area by the touch panel controller at the same time. This also allows the active area to go into sleep mode or a low power state, while there is no touch. The decoupling area is triggered to activate the active area on hand approach.

Also, the sensing electrodes 2 can form a square-type pattern, a triangle-type pattern, a circle-type pattern, or the like, any which is suitable to generate a decoupling area.

## Claims

1. A touch panel (1) comprising:
a conductive layer (4), the conductive layer (4) comprises an active area, whereby the active area comprises a number of electrodes, whereby adjacent electrodes arranged in said active area that said electrodes are decoupled from each other by inactive gaps (3) for preventing conduction between the adjacent electrodes, whereby at least some of the inactive gaps (3) are connected together to form a decoupling area.

2. The touch panel (1) according to claim 1, whereby the decoupling area is used for proximity detection.

3. The touch panel (1) according to claim 1 or 2, whereby the touch panel (1) comprises a controller to drive the decoupling area.

4. The touch panel (1) according to claim 3, whereby
the touch panel (1) comprises a touch panel (1) controller to drive the electrodes.

5. The touch panel (1) according to claim 4, whereby
the active area and the decoupling area is driven in parallel by the controller and the touch panel (1) controller.

6. The touch panel (1) according to claim 4 or 5, whereby the touch panel (1) is configured, so that said active area is set or operated in a sleep mode while operating the decoupling area in a normal mode.

7. The touch panel (1) according to claim 6, whereby
the touch panel (1) is configured, so that the decoupling area is triggered to activate the active area on proximity detection.

8. The touch panel (1) according to any of the previous claims, whereby the inactive gaps (3) are connected together by the use of bridges.

9. The touch panel (1) according to any of the previous claims, whereby the electrodes are of rhombus-shaped form, so that the active area forms a diamond-type pattern.

10. The touch panel (1) according to any of the previous claims, whereby decoupling area is split into zones.

11. The touch panel (1) according to any of the previous claims, whereby all inactive gaps (3) are connected together to form the decoupling area.
